# EUROPEAN PATENT SPECIFICATION

(11) **EP 1 962 654 B1**
(45) Date of publication and mention of the grant of the patent: **01.12.2010**
(21) Application number: 06809190.9
(22) Date of filing: 20.10.2006
(51) Int. Cl.: A47J 31/40

(54) **WAFFLE LOADING UNIT FOR INFUSED BEVERAGES OF VARIOUS KIND FOR COFFEE MAKING MACHINES**
KAPSELLADEEINHEIT FÜR AUFGEGOSSENE GETRÄNKE VERSCHIEDENER ART FÜR KAFFEEMASCHINEN
UNITE DE CHARGEMENT DE DOSSETES POUR DIVERSES BOISSONS INFUSEES DESTINEE A DES MACHINES A CAFE

(30) Priority: 20.10.2005 IT PN20050076
(43) Date of publication of application: 03.09.2008
(73) Proprietor: CMA, S.P.A., 31058 Susegana (TV) (IT)
(72) Inventor: Dal Tio, Nello, 31058 Susegana (TV) (IT)
(74) Representative: Dalla Rosa, Adriano
(86) International application number: PCT/IB2006/003125
(87) International publication number: WO 2007/045995

(56) References cited:
- US-A9- 2005 000 366

## Description

The invention refers to a waffle loading unit for infused beverages of various kind for coffee making machines, employed on the coffee making machines for loading automatically and continuously a plurality of waffles prepared in advance with powder of coffee or other infused beverages, for introducing selectively such waffles on the machines, in order to attain the desired infused beverages, which are distributed onto cups or other containers arranged below them.

Coffee making machines employing waffles prepared in advance for making coffee or similar infused beverages are known, such waffles being contained on a continuous lengthened band which is wound around a suitable loader and is progressively unwound from such loader, by means of suitable movement control and transmission mechanisms, in a way that each waffle be displaced selectively toward the infusion unit, and stopped in correspondence of the same, and under this condition the hot water produced by the boiler of the relative machine be passed through the waffle, thereby making the coffee or other infused beverage which is then collected on a container situated below it.

The object of the present invention is to provide for a waffle loading unit for infused beverages of various kind, like coffee, tea, camomile and the like, for coffee making machines employing waffles of the kind referred to, which unit is shaped and operates in a manner different with respect to the above loader of the currently used coffee making machines and permits to introduce from time to time a separate waffle, and not more joined to form a continuous band as previously, with the possibility to load at any moment additional waffles as soon as the waffles loaded in advance have been used and, after having been exhausted, have been discharged outside.

A prior art waffle loading unit is described in the document US 2005/0000366 A9.

This waffle loading unit is made with the constructive characteristics and the advantages hereinafter described, with particular reference to the attached claims of the present patent. The invention will be better understood from the following description, given by way of not-limiting example only and with reference to the accompanying drawings, wherein :
- Fig. 1 shows a side view of a coffee making machine provided with the loading unit according to the invention ;
- Fig. 2 shows a plan view of the machine of Fig. 1 ;
- Fig. 3 shows a perspective front view of the loading unit according to the invention ;
- Fig. 4 shows a perspective front view of the loading unit of Fig. 5, without the external closing housing;
- Fig. 5 shows a plan view of one of the component parts of the loading unit of Fig. 3 ;
- Fig. 6 shows a perspective front view of the lower part of the loading unit of Fig. 3, without the component part of Fig. 5 and with two additional component parts of the same unit ;
- Fig. 7 shows a perspective front view of the two component parts of the loading unit shown on the Fig. 6 ;
- Fig. 8 shows a front view of the two component parts of Fig. 7 ;
- Fig. 9 shows a perspective and enlarged top view of a constructive item of one of the component parts of Fig. 7 ;
- Fig. 10 shows a perspective front view of a further constructive item of the same component part of Fig. 9 ;
- Fig. 11 shows a front view of a further constructive item of the loading unit of Fig. 3 ;
- Fig. 12 shows a perspective top view of the further constructive item of Fig. 11 ;
- Fig. 13 shows an enlarged view from below of the further constructive item of Fig. 11 ;
- Fig. 14 shows a plan view of the further constructive item of Fig. 11.

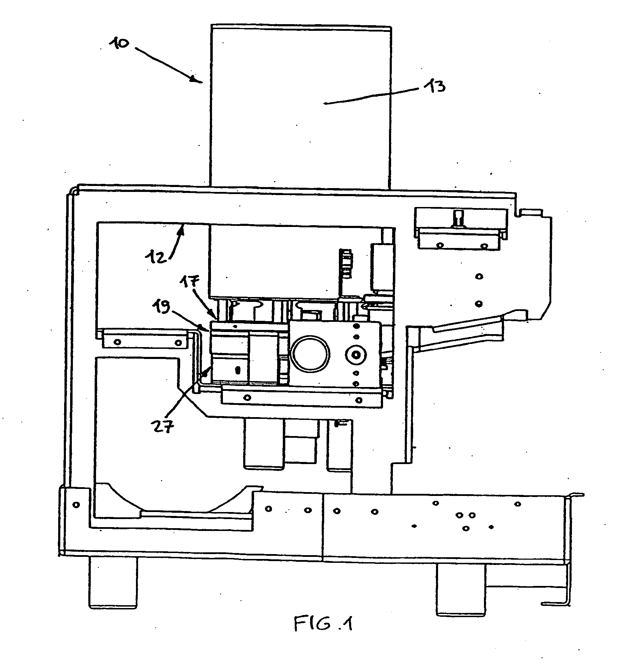

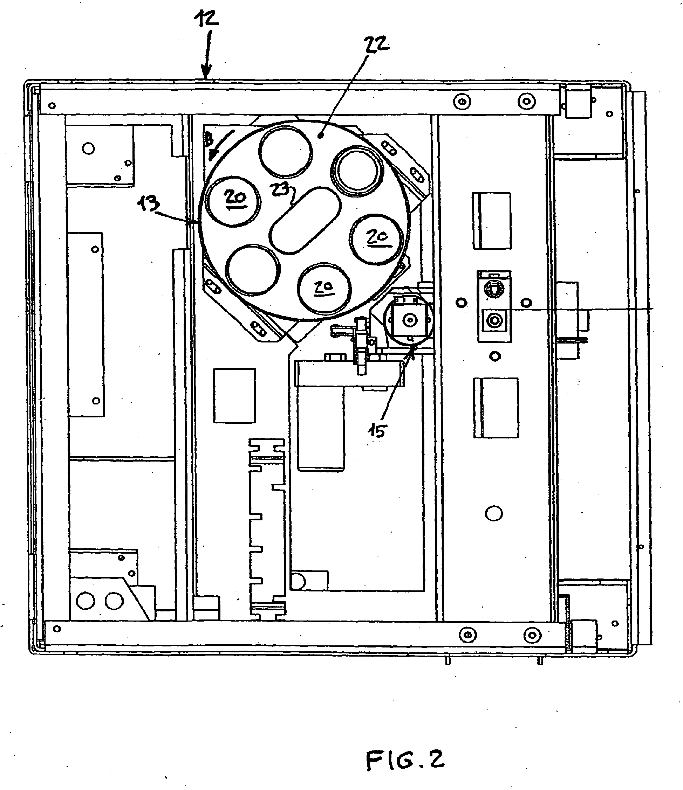

The above mentioned Figures schematically represent a waffle loading unit 10 for coffee making machines employing waffles prepared in advance with powder of coffee, tea, camomile or other infused beverages, having limited sizes and different shapes, said unit being adapted to load automatically and continuously in a selective manner a plurality of separated waffles on the infusion and distributing unit 11 of the coffee making machine in which it is fitted, in order to attain the coffee or other desired infused beverages, which is distributed on a cup or container situated below it. In particular, each coffee making machine is constituted as usually (see Figs. 1 and 2) by a box-like envelope 12 containing at least a heating boiler (not indicated), joined with water circulating conduits and the beverages infusion and distributing unit 11, and arranged for heating water to be introduced through said infusion and distributing unit, in which the waffles are selectively introduced from the present loading unit, and water heating is effected with such temperatures as to attain both hot water to be passed through each waffle introduced into the infusion and distributing unit, with consequent production of coffee or other infused beverage, and water vapour for heating beverages of various kind.

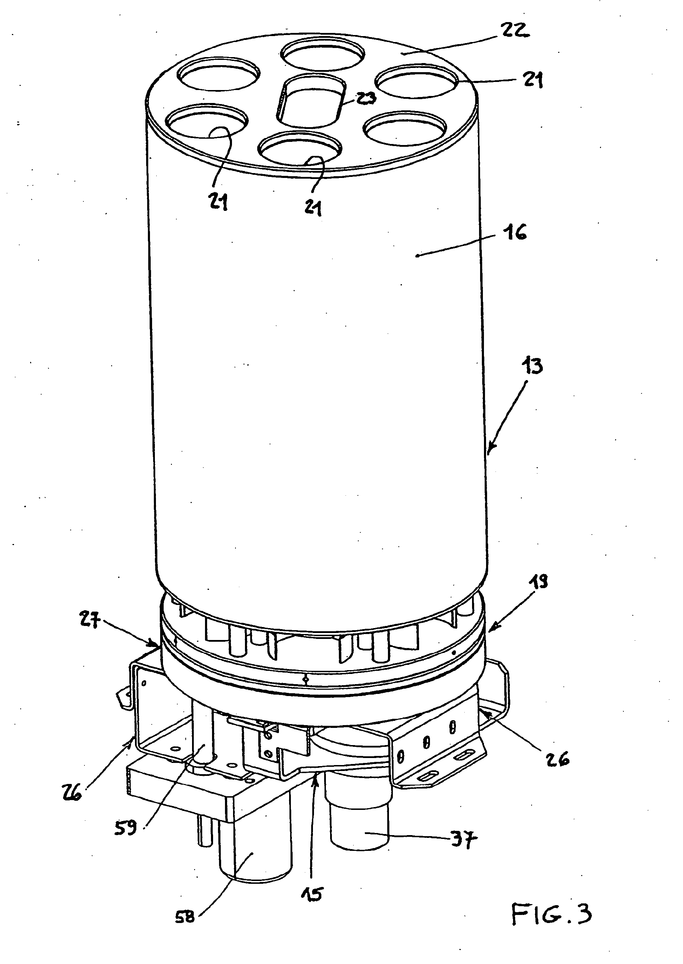

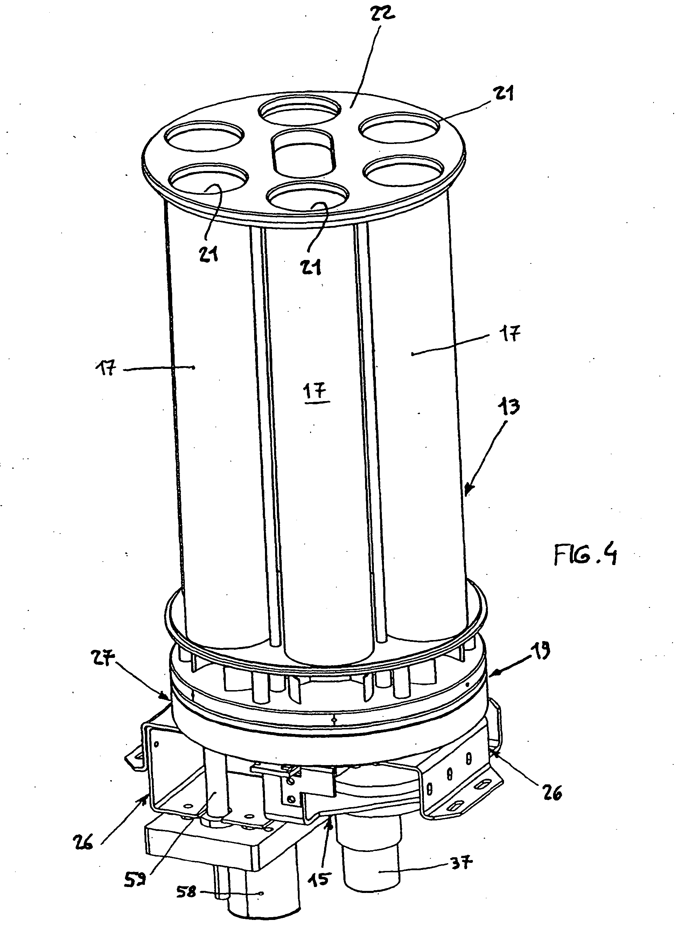

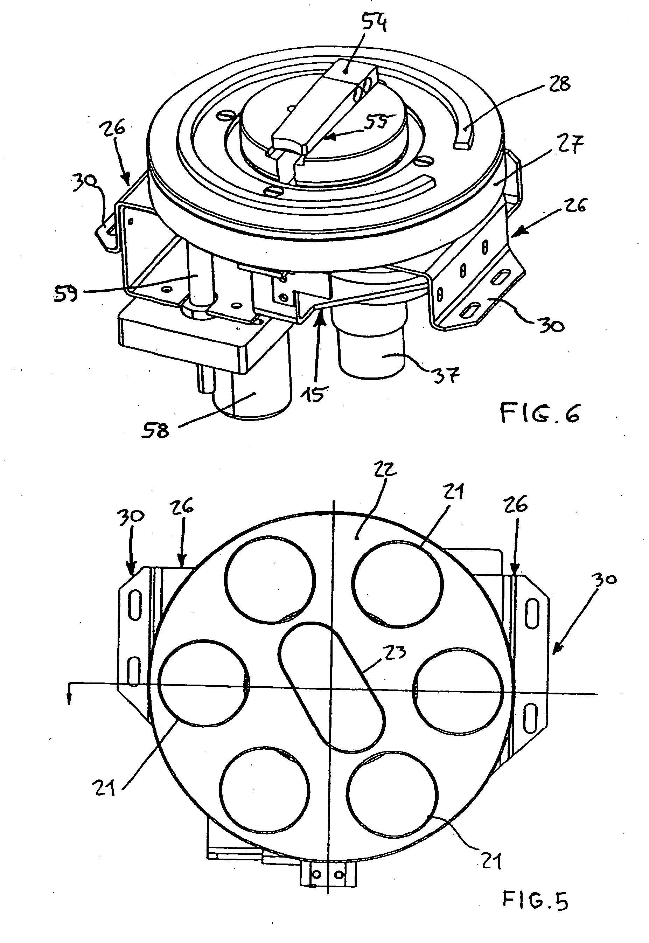

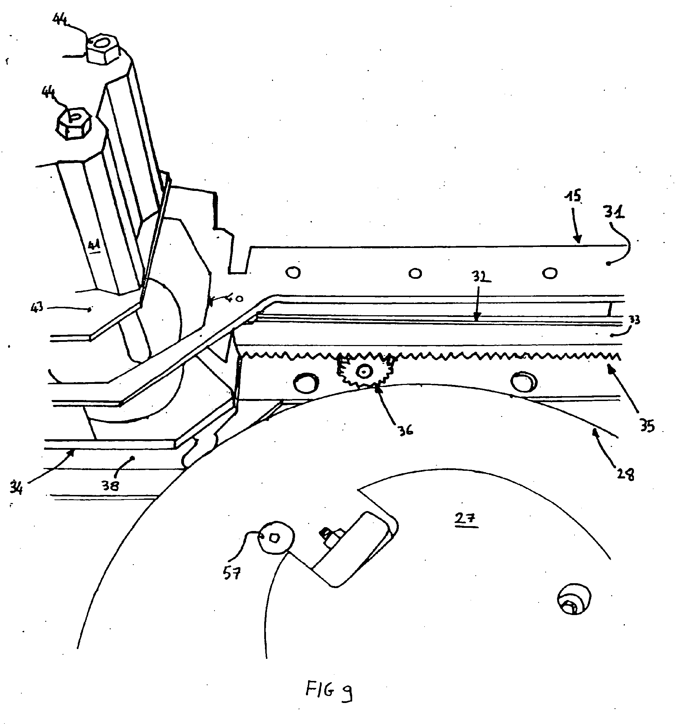

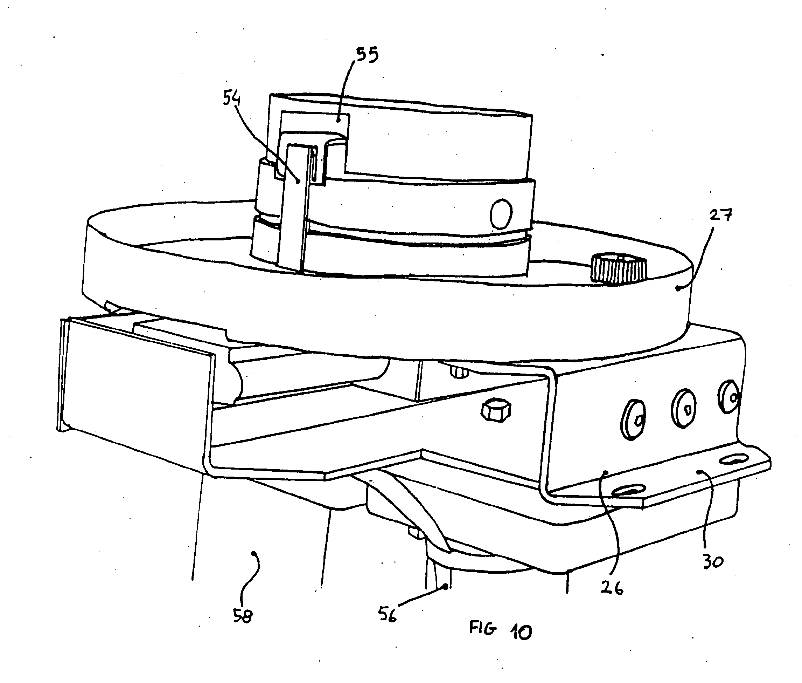

The loading unit according to the invention is substantially constituted by a waffle loading basket 13 with vertically extended lengthened cylindrical shape, mounted on the box-like envelope 12 and adapted to contain a plurality of waffles 14 containing the powders of the beverages to be prepared, in the present example of 6 different types of coffee blends, such unit being also constituted by a waffle feeder and expeller 15 and the above mentioned infusion and distributing unit 11, which are situated on a position below the loading basket 13 and made as it will be described later on. Besides, the coffee making machine comprises a set of selection push buttons (not shown) applied on the front part of the envelope 12 of the same machine and provided for selecting the respectively desired types and the dose of the infused beverage (a lot or a little dose). In particular, the waffle loading basket 13 (see Figs. 3, 4 and 5) is constituted by a removable external cylindrical housing 16 adaptable by insertion on to a set of cylindrical closed columns 17 made of stiff material, which are internally hollow, and extend for the entire height of the same basket and are spaced away by the same angular distance therefrom, wherein the upper end portions of such columns are open for permitting the waffle, which are positioned stacked to each other, to be introduced therein, and the lower end portions of such columns communicate with a respective side through opening (not shown), for extracting from each column in the manner which will be described the waffle situated on the lower position of the same column. Moreover, such lower end portions of the columns 17 are joined with a circular base plate 19 having limited thickness, situated below them. The loading of the waffles 14 into the respective inner cavities 20 of the column 17 occurs through corresponding through holes 21 provided on the horizontal upper wall 22 of the external housing 16, wall onto which a slot-like central through opening 23 is also provided, for introducing the fingers for applying the housing 16 on to the columns 17 and for detaching such housing from the same columns. In turn, the base plate 19 is provided with a central through opening (not shown) provided for being adapted to and applied on the remaining component parts of the loading unit, so as to perform the functions hereinafter described, and for permitting the waffles to pass therein and to be introduced into the waffles feeder and expeller 15 situated below it. In particular, such waffles feeder and expeller 15 and the infusion and distributing unit 11 are grouped together, so as to form an assembly which is passed through a central through opening (not shown) of a shaped square 26 supporting a further circular plate 27 (see Fig. 6) situated above it, having the same shape and size of the base plate 19 and adapted to be coupled removably with this latter, by means of a bayonet joint 28 or other suitable joining system. Such further circular plate 27 is also provided with a central through opening (not shown) coinciding with the respective through openings of both the base plate 19 and the shaped square 26, for permitting the passage of the assembly waffles feeder and expeller 15-infusion and distributing unit 11, and can be also driven in rotation in a single rotation direction by means of a movement transmission mechanism which will be described hereinafter, thereby providing for the rotation also of the base plate 19 and the waffle loading basket 13 situated above it, in a way to displace from time to time a column 17 of this basket on the position in which the lower waffle 14 of the waffle set contained into the same column arranges itself on the loading position thereof, coinciding with that of the waffle feeder 15 situated below it, which will be described later on, thereby allowing firstly the waffle to be introduced into the feeder 15 and then to be displaced in correspondence with the infusion and distributing unit 11, so as to let hot water to pass through the same waffle for preparing the relative infused beverage. In turn, the support square 26 is shaped with two side folded edges 30, adapted to be secured by screws (not indicated) or the like to the machine box-like envelope 12. The waffle feeder and expeller 15 is substantially constituted by a C shaped lengthened section bar 31, which is secured below the shaped square 26 and into which a slidable slider 32 is housed, which is formed by a lengthened rectilinear portion 33 and a widened portion 34, of which the lengthened portion 33 is provided with a rack 35 engaging a pinion 36 (Fig. 9), which can be driven in rotation in two rotation directions opposite to each other by a gearmotor 37, adequately supported by the feeder 15, in a manner to displace in an alternate rectilinear direction the slidable slider 32. In turn, the widened portion 34 is shaped with two lower rectilinear guide members 38 slidable into corresponding shaped elements 39 secured to the C shaped section bar 31, and a waffle carrying seat 40 situated above them, which is dimensioned for housing a waffle at a time and provided for receiving such waffle from the loading basket 13, when the slider 32 is displaced on its loading position in which the seat 40 is situated on a position coinciding to that of the column 17 into which the selected waffle is contained, and for moving such waffle below the infusion and distributing unit 11, thereby preparing the desired infused beverage, when the slider 32 is displaced on to the relative infusion position in the feeding direction A. Furthermore, the waffle feeder and expeller 15 is also constituted by an upper hydraulic cylinder 41 and a lower hydraulic cylinder 42, connected in the machine hydraulic circuit and fixed respectively on the upper part and lower part of the C shaped section bar 31, on a position coinciding to each other and to that of the waffle carrying seat 40, when the slider 32 is displaced on its loading position. The upper cylinder 41 is supported by a flat plate 43 secured to the C shaped section bar 31 by means of stud bolts 44, which are slightly projected downwards on their lower part (see Fig. 10), and is provided with a central punch 45 adapted to perforate the upper wall of each waffle, thereby allowing hot water to pass through the powdered substance contained into the same waffle. Moreover, this upper cylinder 41 is connected to a solenoid valve (not shown) connected in the machine electric circuit and associated to the hydraulic circuit of the same machine, such solenoid valve being actuated from a rest position thereof, in which it provides for keeping closed the hydraulic circuit, under the condition in which the cylinder 41 is raised, together with the punch 45, to a working position thereof in which it provides for opening the hydraulic circuit, under the condition in which the cylinder 41 is lowered, together with the punch 45, and thereby such punch provides for perforating the upper wall of each waffle. Similarly, also the lower cylinder 42 is supported by a bracket 46 secured to the C shaped section bar 31 and is provided with a central punch 47 adapted to perforate the lower wall of each waffle, thereby allowing hot water to pass through the waffle and the so produced infused beverage to fall downward. This lower cylinder 42 is realized in a manner identical to the upper cylinder 41 and both the cylinders 41 and 42 are actuated with such a succession that to provide for firstly the perforation of the waffle upper wall and thereafter that of the lower wall of the same waffle. During the perforation of the waffle upper wall, the punch 45 could remain driven in the same upper wall, thereby providing also for an undesired raising of the waffle.

However, this raising is prevented from the lower projected portion of the stud bolts 44 which, by bearing against such waffle upper wall, provides for detaching the punch 45 from said waffle upper wall and consequently to let the waffle to fall on to its housing seat 40. Finally, the slidable slider 32 is extended at its front side with a flat plate 48, onto which a small hopper 49 having its loading mouth 50 turned upwards is secured, which hopper is provided for performing the function which will be described later on.

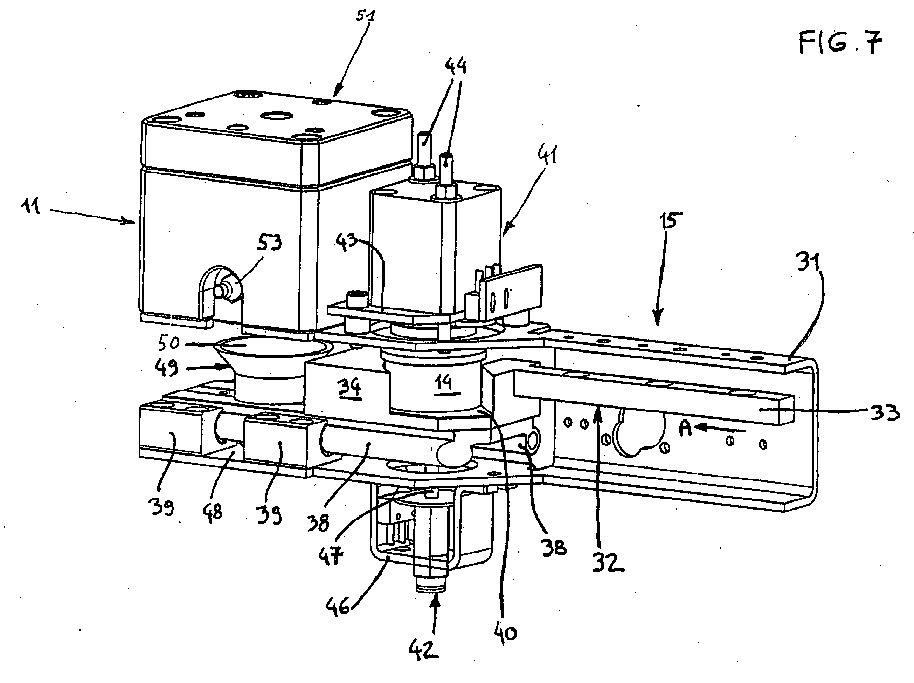

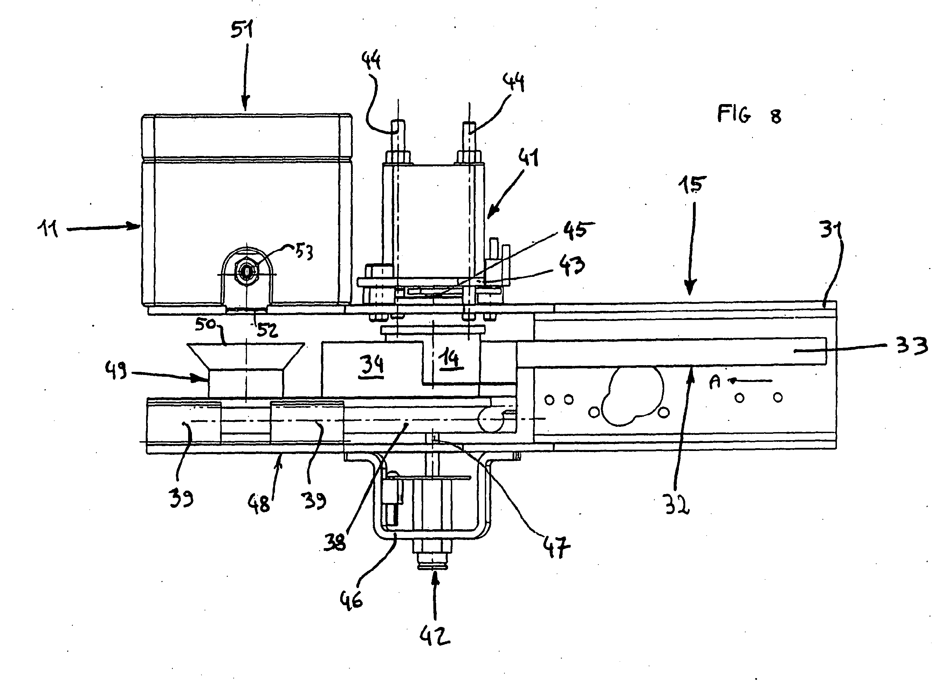

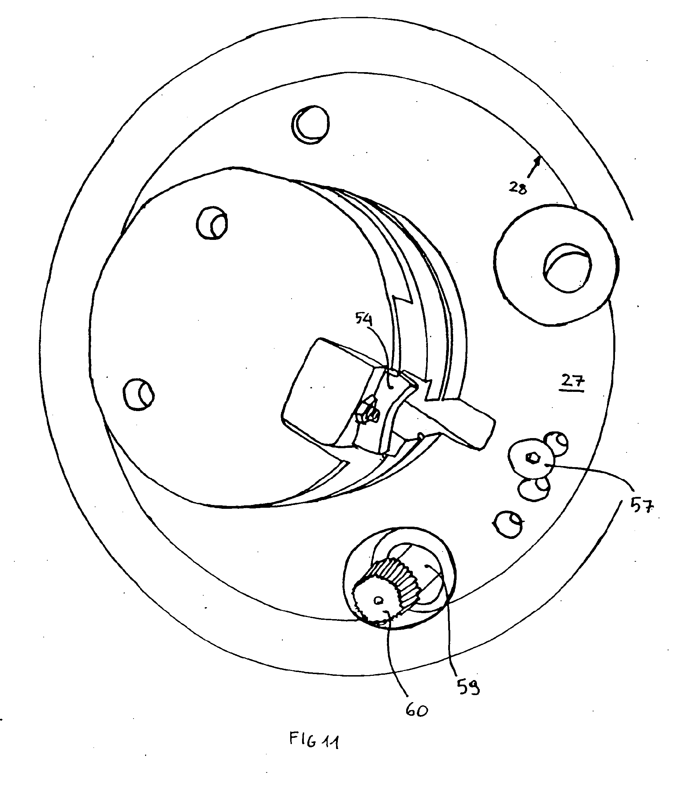

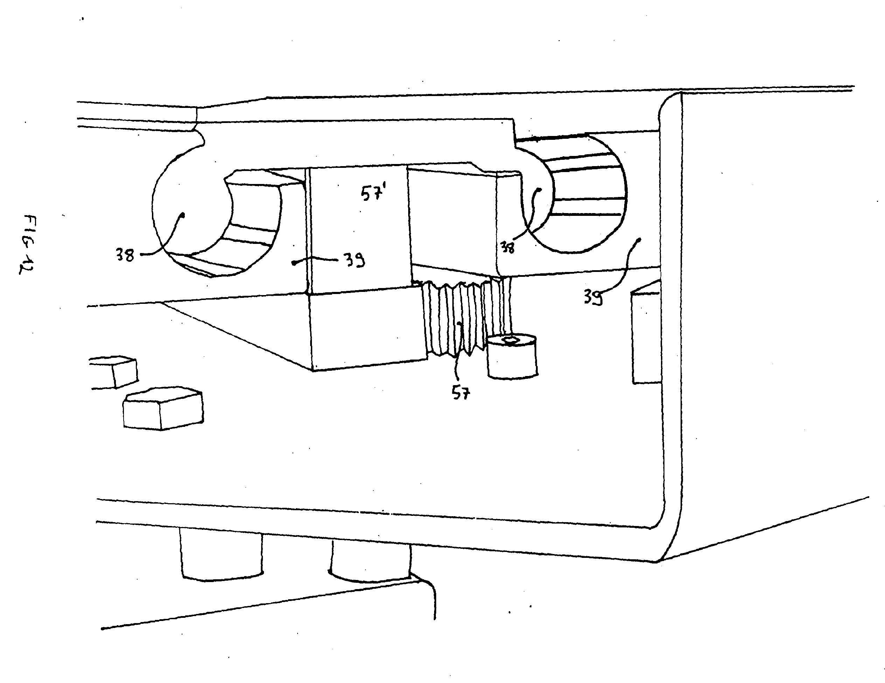

In turn, the infusion and distributing unit 11 (see Figs. 7 and 8) is substantially constituted by another upper hydraulic cylinder 51, secured to the C shaped section bar 31 and connected to the machine hydraulic circuit as well as associated to a solenoid valve (not indicated) connected to the machine electric circuit, which can be actuated from a closing position thereof, in which water does not enter the cylinder 51, so that this is kept on its raised rest position, to an opening position thereof, in which water enters the cylinder 51, so that this is displaced to its lowered working position. Moreover, this cylinder 51 is provided with a lower spraying shower 52 adapted to spray hot water on to the waffle upper wall, on the lowered position of the same cylinder, so as to permit hot water introduced through a supply conduit 53 joined to the cylinder 51 to pass through the waffle, with consequent preparation of the infused beverage, which is distributed by passing through another solenoid valve (not indicated) situated below it, and is collected on the cup or other container arranged on a position below it. In order to provide for the displacement of each waffle situated on the lower position of the relative column, it is provided an extractor 54 on the upper central area of the circular plate 27 (see Figs. 11, 12 and 14), which is slidable in an alternate rectilinear direction with a short stroke, limited by suitable limit switches (not shown), analogous to those delimiting the stroke of the slidable slider 32, along a slot 55, and is driven by a gearmotor 56 through a system pinion 57 and rack 57'(see Figs. 12 and 13), both supported by the assembly waffle feeder - infusion and distributing unit. This extractor 54 is situated on a position corresponding to the side through opening of each column, in a manner to push, when it is actuated, the relative waffle towards the corresponding waffle carrying seat 40 of the feeder 15, thereby arranging the same waffle on to this seat, and then to return back on its starting position, for extracting a subsequent waffle in the same way. In turn, the waffle loading basket 13 may be driven in rotation, in a single rotation direction B, by another gearmotor 58 supported by the assembly waffle feeder - infusion and distributing unit, said gearmotor being provided with a motor shaft 59 provided with pinion 60 (see Figs. 12 and 14) meshing with a corresponding crown gear (not shown) secured internally the circular plate 27. In this manner, the waffle loading basket 13 may be from time to time rotated by the motorgear 58 into the desired position, in which the column containing the waffles with the powdered substance, from which the selected infused beverage is prepared, is positioned in correspondence of the extractor 54. As soon as this operation is ended, the extractor is actuated automatically, thereby pushing the selected waffle on to the feeder waffle carrying seat. On this position, the waffle is perforated in succession on its upper and lower walls through the punches 45 and 47, and then is displaced by the feeder 15 on a position below the cylinder 51, in which the infusion in the described manners does occur.

Contemporaneously, the slidable slider 32 pushes any previously used exhausted waffle towards a chute (not indicated) situated on a position coinciding with the sliding path of such slider, and under this situation such exhausted waffle is collected on an underlying collecting tank (not shown) provided in the machine. Thereafter, the slidable slider 32 is returned back with a reverse movement to its starting position, thereby arranging the present loading unit for loading a further waffle and preparing a subsequent selected infused beverage in the same described ways. Finally, after that several working cycles have been carried out, the infusion and distributing unit 11 is washed with water which is conveyed through the underlying hopper 49 and discharged outwardly.

## Claims

1. Waffle loading unit for infused beverages of various kind, like coffee, tea, camomile and the like for coffee making machines, adapted to load automatically and continuously in a selective manner a plurality of separated waffles into the machine infusion and distributing unit, each machine comprising also, enclosed by a box-like envelope, at least a boiler for heating water and producing steam joined to water circulation conduits and said infusion and distributing unit, for preparing and distributing metered infused beverages respectively selected by means of selector means provided in the same machines, the unit being **characterized by** a waffle loading basket (13), preferably of extended cylindrical shape with vertical extent, mounted into said box-like envelope (12) and provided with a plurality of internally hollow cylindrical columns (17), extended for the entire height of the same basket and spaced away from each other preferably by the same angular distance, adapted to contain a plurality of waffles (14) stacked to each other, of the same type of beverage for a column and of the same type or of different types of beverages for the remaining columns, and **characterized by** waffle feeder and expeller means (15) and waffle extractor means (54), co-operating with said waffle loading basket (13), of which said waffle feeder and expeller means (15) are adapted to load selectively said waffles (14) on a pre-established loading position and to displace each loaded waffle in correspondence of said infusion and distributing unit (11), so as to prepare the relative infused beverage, with contemporaneous ejection of the previously used exhausted waffle, and said waffle extractor means (54) are adapted to extract each waffle (14) of the respectively selected type of beverage, which is situated on the lower position of each column (17) which has been displaced in correspondence of the same extractor means, and to load such waffle on the loading position of said feeder and expeller means (15), said waffle loading basket (13) being supported by first supporting means (19) which can removably engage second supporting means (27) arranged below it, which can be driven in rotation by first powered means (58) for displacing each column (17) containing the waffles of the respectively selected beverages in correspondence of said extractor means (54), and **characterized** also by perforating means (45 and 47) associated with said waffle feeder and expeller means (15) and adapted to perforate each waffle (14) before the infusion step, for permitting hot water to pass through the same waffle so as to distribute subsequently the so prepared infused beverage.

2. Loading unit according to claim 1, **characterized in that** the columns (17) of said waffle loading basket (13) are open at their upper parts for introducing the respective waffles (14) therein, and are provided at their lower parts with a respective side through opening, which is from time to time put into coincidence with said extractor means (54), for extracting from each column (17) the lower waffle of the respectively selected type of beverage, said columns (17) being enclosed by a corresponding removable external cylindrical housing (16), provided with an upper wall (22) provided through holes (21) corresponding with the respective inner cavities (20) of the same columns, and a slot-like central through opening (23) for grasping said housing (16) for applying it to and removing it with respect to said columns (17).

3. Loading unit according to claim 1, **characterized in that** said first supporting means (19) are provided with a central through opening for permitting the waffles (14) to pass therein and to be introduced into the loading position of said waffle feeder and expeller means (15).

4. Loading unit according to claim 3, **characterized in that** said second supporting means (27) can be coupled with said first supporting means (19) by joining means (28) and are supported by support means (26) which can be secured to said box-like envelope (12), as well as are provided with a central through opening coinciding with said central through opening of said first supporting means (19), for permitting the assembly waffle feeder and expeller (15) - infusion and distributing unit (11) to pass therethrough.

5. Loading unit according to claim 4, **characterized in that** said first powered means comprise a gearmotor (58) supported by said assembly and provided with a motor shaft (59) provided with pinion (60) meshing with a corresponding crown gear secured internally said second supporting means (27).

6. Loading unit according to claim 4, **characterized in that** said waffle feeder and expeller means (15) comprise a C shaped extended section bar (31), which is fixed below said support means (26) and into which a slidable slider (32) is housed, formed by a lengthened rectilinear portion (33) and a widened portion (34), of which said lengthened portion (33) is provided with a rack (35) engaging a pinion (36), which can be driven in rotation in two rotation directions opposite to each other by a gearmotor (37), supported by said feeder means (15) in a way to displace said slidable slider (32) in an alternate rectilinear direction, with a stroke limited by stroke limiting means, and of which said widened portion (34) is shaped with lower rectilinear guide members (38) slidable into corresponding shaped elements (39) secured to said C shaped section bar (31) and with an upper waffle carrying seat (40), dimensioned for housing a waffle at a time coming from said loading basket (13) on the loading position of said slidable slider (32), wherein said seat (40) is situated in a position coinciding with that of the column (17) in which the selected waffle is contained, said seat (40) being adapted to displace the loaded waffle below said infusion and distributing unit (11) when said slidable slider (32) is displaced on the relative infusion position, in which it pushes and expels contemporaneously any previously used exhausted waffle, by discharging it on an underlying machine collecting tank, said slidable slider (32) being extended at its front side with a flat plate (48), onto which a small hopper (49) having its loading mouth (50) turned upwards is secured.

7. Loading unit according to claim 6, **characterized in that** said waffle feeder and expeller means (15) comprise moreover an upper hydraulic cylinder (41) and a lower hydraulic cylinder (42) connected on the machine hydraulic circuit and secured respectively to the upper part and the lower part of said C shaped section bar (31), on positions coinciding to each other and to that of said waffle carrying seat (40), when said slider (32) is displaced on its loading position, said cylinders (41, 42) being provided with a respective central punch (45, 47) adapted to perforate in succession the upper wall and the lower wall of each waffle (14), and being connected to a respective solenoid valve, connected to the machine electric circuit and associated to the hydraulic circuit of the same machine, each solenoid valve being actuated from a rest position in which the hydraulic circuit is kept closed and the relative cylinder is raised, together with the corresponding punch (45, 47), to a working position in which the hydraulic circuit is open and the relative cylinder is lowered, together with the corresponding punch (45, 47), so that this latter provides for perforating the relative wall of each waffle.

8. Loading unit according to claim 7, **characterized in that** said upper cylinder (41) is supported by a flat plate (43) secured to said C shaped section bar (31) by means of stud bolts (44), slightly projected downwards on their lower part, for preventing the waffle from being raised during the perforation of its upper wall, by detaching the same waffle which thus falls on its housing seat (40) of said slidable slider (32), and **characterized in that** said lower cylinder (42) is supported by a bracket (46) secured to said C shaped section bar (31).

9. Loading unit according to claim 6, **characterized in that** said infusion and distributing unit (11) is constituted by a further upper hydraulic cylinder (51), provided with a lower spraying shower (52) adapted to spray hot water on to the upper wall of the relative waffle (14), said further cylinder (51) being secured to said C shaped section bar (31) and connected to the machine hydraulic circuit as well as associated to a solenoid valve, connected to the machine electric circuit and which can be actuated from a closing position thereof, in which water does not enter said further cylinder (51), thereby keeping it on its raised position, to an opening lowered position, with consequent spraying through said shower (52) of hot water on to the upper wall of said waffle (14), which water is introduced through a supply conduit (53) joined to said further cylinder (51).

10. Loading unit according to claim 4, **characterized in that** said waffle extractor means (54) comprise an extractor (54), situated on the upper central area of said second supporting means (27) and slidable on an alternate rectilinear direction with a short stroke, limited by stroke limit means, along a slot (55), and driven by a gearmotor (56) through a system pinion (57) and rack (57'), both supported by said assembly.

## Patentansprüche

1. Kapselladeeinheit für aufgegossene Getränke verschiedener Art wie Kaffee, Tee, Kamille und dergleichen für Kaffeemaschinen, die geeignet ist, automatisch und fortlaufend auf eine ausgewählte Weise mehrere einzelne Kapseln in die Maschinenaufgieß- und Abgabeeinheit zu laden, wobei jede Maschine außerdem, eingeschlossen von einem kastenähnlichen Gehäuse, wenigstens einen Boiler aufweist, um Wasser zu erhitzen und Dampf zu erzeugen, der in Wasserzirkulationsleitungen und die Aufgieß- und Abgabeeinheit eingebracht wird, um aufgegossene Getränke zu erzeugen und abzugeben, die mit Hilfe von Auswahlmitteln in denselben Maschinen ausgewählt sind, wobei die Einheit durch einen Kapselladekorb (13) von bevorzugt länglicher zylindrischer Form mit vertikaler Erstreckung **gekennzeichnet** ist, der in das Kasten-ähnliche Gehäuse (12) eingebaut ist und mit mehreren, innen hohlen, zylindrischen Säulen (17) versehen ist, die sich über die gesamte Höhe des Korbes erstrecken und vorzugsweise in demselben Winkelabstand voneinander beabstandet sind und geeignet sind, mehrere Kapseln (14) aufeinander gestapelt von derselben Getränkeart für eine Säule und derselben Art oder verschiedener Arten der Getränke für die übrigen Säulen zu enthalten, und **gekennzeichnet durch** Kapselzuführ- und Ausstoßmittel (15) und Kapselausziehmittel (54), die mit dem Kapselladekorb (13) zusammen wirken, von denen die Kapselzuführ- und Ausstoßmittel (15) geeignet sind, wahlweise die Kapseln (14) in einer vorbestimmten Ladeposition zu laden und jede geladene Kapsel in Übereinstimmung mit der Aufgieß- und Abgabeeinheit (11) zu verlagern, um so das jeweilige aufgegossene Getränk herzustellen, mit gleichzeitigem Ausstoß der zuvor gebrauchten, verbrauchten Kapsel, und wobei die Kapselausziehmittel (54) geeignet sind, um jede Kapsel (14) der jeweils ausgewählten Art von Getränk auszuziehen, die in der unteren Position jeder Säule (17) sich befindet, die in Übereinstimmung mit den Ausziehmitteln verlagert ist, um die Kapsel in die Ladeposition der Zuführ- und Ausstoßmittel (15) zu laden, wobei der Kapselladekorb (13) von ersten Haltemitteln (19) gestützt ist, die entnehmbar zweite Haltemittel (27) ergreifen, die darunter angeordnet sind, die von ersten angetriebenen Mitteln (58) in eine Drehung versetzt werden können, um jede Säule (17) zu verlagern, die die Kapseln der jeweils ausgewählten Getränke in Übereinstimmung mit den Ausziehmitteln (54) enthalten, und ferner **gekennzeichnet durch** Perforierungsmittel (45 und 47) die mit den Kapselzuführ- und Ausziehmitteln (15) verbunden und geeignet sind, jede Kapsel (14) vor dem Aufgießschritt zu perforieren, um es zu ermöglichen, dass heißes Wasser die Kapsel passiert, um anschließend das so hergestellte, aufgegossene Getränk abzugeben.

2. Ladeeinheit nach Anspruch 1,
**dadurch gekennzeichnet,**
**dass** die Säulen (17) des Kapselladekorbs (13) an ihren oberen Teilen offen sind zum Einführen der jeweiligen Kapseln (14) darin, und dass sie an ihren unteren Teilen mit einer jeweiligen Durchgangsöffnung versehen sind, die von Zeit zu Zeit in Koinzidenz mit den Ausziehmitteln (54) gebracht wird, um von jeder Säule (17) die untere Kapsel der jeweils ausgewählten Art von Getränk heraus zu ziehen, wobei die Säulen (17) von einem zugehörigen entfernbaren, äußeren zylindrischen Gehäuse (16) eingeschlossen sind, das mit einer oberen Wand (22) mit Durchgangslöchern (21) versehen ist, die mit den jeweiligen inneren Hohlräumen (20) der Säulen übereinstimmen, und mit einer mittigen Schlitz-ähnlichen Durchgangsöffnung (23) zum Ergreifen des Gehäuses (16), um es an den Säulen (17) anzubringen und zu entfernen.

3. Ladeeinheit nach Anspruch 1,
**dadurch gekennzeichnet,**
**dass** die ersten Haltemittel (19) mit einer zentralen Durchgangsöffnung versehen sind, um es den Kapseln (14) zu erlauben, dort hinein zu gehen und in die Ladeposition der Kapselzuführ- und Ausstoßmittel (15) eingeführt zu werden.

4. Ladeeinheit nach Anspruch 3,
**dadurch gekennzeichnet,**
**dass** die zweiten Haltemittel (27) mit den ersten Haltemittel (19) durch Verbindungsmittel (28) gekoppelt werden können und von Haltemitteln (26) gehalten sind, die an dem Kasten-ähnlichen Gehäuse (12) befestigt werden können, und dass sie mit einer zentralen Durchgangsöffnung versehen sind, die mit der zentralen Durchgangsöffnung der ersten Haltemittel (19) zusammenfällt, um es der Aufbaukapselzuführ- und Ausstoß (15) -Aufgieß-und Abgabeeinheit (11) zu erlauben, hindurchzugehen.

5. Ladeeinheit nach Anspruch 4,
**dadurch gekennzeichnet,**
**dass** die ersten angetriebenen Mittel einen Getriebemotor (58) aufweisen, der von der Anordnung gehalten und mit einer Motorwelle (59) versehen ist, die mit einem Ritzel (60) versehen ist, das mit einem zugehörigen Kronenzahnrad kämmt, das in den zweiten Haltemitteln (27) befestigt ist.

6. Ladeeinheit nach Anspruch 4,
**dadurch gekennzeichnet,**
**dass** die Kapselzuführ- und Ausstoßmittel (15) eine C-förmig sich erstreckende Leiste (31) aufweisen, die unter den Haltemitteln (26) befestigt ist und in der ein gleitbares Gleitstück (32) untergebracht ist, geformt durch einen länglichen geradlinigen Abschnitt (33) und einen verbreiterten Abschnitt (34), wobei der längliche Abschnitt (33) mit einer Zahnstange (35) versehen ist, die ein Ritzel (36) ergreift, das von einem Getriebemotor (37) in zwei zueinander entgegengesetzten Drehrichtungen in Rotation versetzt werden kann, gehalten von den Zuführmitteln (15) auf eine Weise, um das gleitbare Gleitstück (32) in einer wechselnden geradlinigen Richtung zu verlagern, mit einem Hub, der von Hubbegrenzungsmitteln begrenzt ist, wobei der verbreiterte Abschnitt (34) mit unteren geradlinigen Führungsgliedern (38) geformt ist, die in entsprechend geformten Elementen (39) verschieblich sind, die an der C-förmigen Leiste (31) befestigt sind, und mit einem oberen Kapsel tragenden Sitz (40), der bemessen ist, um zu einer Zeit eine Kapsel aufzunehmen, die von dem Ladekorb (13) in der Ladeposition des gleitbaren Gleitstücks (32) kommt, wobei der Sitz (40) in einer Position angeordnet ist, die mit derjenigen der Säule (17) übereinstimmt, in der sich die ausgewählte Kapsel befindet, wobei der Sitz (40) geeignet ist, die geladene Kapsel unter die Aufgieß- und Abgabeeinheit (11) zu verlagern, wenn das gleitbare Gleitstück (32) in die jeweilige Aufgießposition verlagert ist, in der sie jede zuvor benutzte, verbrauchte Kapsel drückt und ausstößt durch ihre Abgabe in einen darunter befindlichen Maschinensammeltank, wobei das gleitbare Gleitstück (32) an seiner Vorderseite mit einer flachen Platte (48) verlängert ist, an der ein kleiner Trichter (49) befestigt ist, dessen Ladeöffnung (50) nach oben gedreht ist.

7. Ladeeinheit nach Anspruch 6,
**dadurch gekennzeichnet,**
**dass** die Kapselzuführ- und Ausstoßmittel (15) außerdem einen oberen Hydraulikzylinder (41) und einen unteren Hydraulikzylinder (42) enthalten, die mit dem Maschinenhydraulikkreis verbunden und an dem zugehörigen oberen Teil und dem unteren Teil der C-förmigen Abschnittsleiste (31) befestigt sind, an Positionen, die miteinander und mit derjenigen des Kapsel tragenden Sitzes (40) übereinstimmen, wenn das Gleitstück (32) in seine Ladeposition verlagert ist, wobei die Zylinder (41,42) mit einem zugehörigen mittigen Dorn (45, 47) versehen sind, der geeignet ist, nacheinander die obere Wand und die untere Wand jeder Kapsel (14) zu durchstechen, und verbunden sind mit einem zugehörigen Solenoidventil, das mit dem elektrischen Stromkreis der Maschine und mit dem Hydraulikkreis der Maschine verbunden ist, wobei jedes Solenoidventil aus einer Ruheposition, in der der Hydraulikkreis geschlossen bleibt und der zugehörige Zylinder angehoben ist, zusammen mit dem zugehörigen Dorn (45, 47) in eine Arbeitsposition betätigt wird, in der der Hydraulikkreis offen ist und der zugehörige Zylinder abgesenkt ist, zusammen mit dem zugehörigen Dorn (45, 47), so dass dieser die zugehörige Wand jeder Kapsel perforiert.

8. Ladeeinheit nach Anspruch 7,
**dadurch gekennzeichnet,**
**dass** der obere Zylinder (41) von einer flachen Platte (43) gehalten ist, die an der C-förmigen Abschnittsleiste (31) mit Hilfe von Schraubenbolzen (44) befestigt ist, die an ihrem unteren Teil etwas nach unten vorstehen, um zu verhindern, dass die Kapsel während der Perforation ihrer oberen Wand angehoben wird, indem sie die Kapsel berühren, die damit in ihren Aufnahmesitz (40) des verschieblichen Gleitstücks (32) fällt, und **dadurch gekennzeichnet, dass** der untere Zylinder (42) von einem Arm (46) gehalten ist, der an dem C-förmigen Abschnittsstreifen (31) befestigt ist.

9. Ladeeinheit nach Anspruch 6,
**dadurch gekennzeichnet,**
**dass** die Aufgieß- und Abgabeeinheit (11) durch einen weiteren oberen Hydraulikzylinder (51) gebildet ist, der mit einer unteren Sprühbrause (52) versehen ist, die geeignet ist, heißes Wasser auf die obere Wand der zugehörigen Kapsel (14) zu sprühen, wobei der weitere Zylinder (51) an dem C-förmigen Abschnittsstreifen (31) befestigt und mit dem Hydraulikkreis der Maschine sowie mit einem Solenoidventil verbunden ist, verbunden mit dem elektrischen Stromkreis der Maschine, der von seiner geschlossenen Position, in der kein Wasser in den weiteren Zylinder (51) eintritt, und der dabei in seiner angehobenen Position gehalten ist, in eine öffnende untere Position betätigt werden kann, mit anschließendem Sprühen von heißem Wasser durch die Brause (52) auf die obere Wand der Kapsel (14), wobei das Wasser durch eine Zuführleitung (53) eingeführt wird, die mit dem weiteren Zylinder (51) verbunden ist.

10. Ladeeinheit nach Anspruch 4,
**dadurch gekennzeichnet,**
**dass** die Kapselausziehmittel (54) einen Extraktor (54) aufweisen, der sich in dem oberen mittigen Bereich der zweiten Haltemittel (27) befindet und in einer wechselnden geradlinigen Richtung mit einem kurzen Hub, begrenzt durch Hubbegrenzungsmittel, entlang eines Schlitzes (55) verschieblich ist, angetrieben durch einen Getriebemotor (56) über ein Systemantriebsritzel (57) und eine Zahnstange (57'), die beide von der Anordnung gehalten sind.

## Revendications

1. Unité de chargement de dosettes pour boissons infusées de différents types, telles que du café, du thé, de la camomille et analogues destinée à des machines de préparation de café, adaptée pour charger automatiquement et en continu d'une manière sélective une pluralité de dosettes séparées dans l'unité d'infusion et de distribution de la machine, chaque machine comprenant également, renfermée par une enveloppe en forme de boîte, au moins une bouilloire pour chauffer de l'eau et produire de la vapeur reliée à des conduites de circulation d'eau et à ladite unité d'infusion et de distribution, pour préparer et distribuer des boissons infusées dosées respectivement sélectionnées au moyen d'un moyen de sélection fourni dans les mêmes machines, l'unité étant **caractérisée par** un panier de chargement de dosettes (13), de préférence de forme cylindrique allongée verticalement, monté dans ladite enveloppe en forme de boîte (12) et muni d'une pluralité de colonnes cylindriques creuses intérieurement (17), s'étendant sur la hauteur totale du même panier et écartées les unes des autres de préférence par la même distance angulaire, adaptées pour contenir une pluralité de dosettes (14) empilées les unes sur les autres, du même type de boissons pour chaque colonne et du même type ou de différents types de boissons pour les colonnes restantes, et **caractérisée par** des moyens d'alimentation et d'expulsion de dosettes (15) et des moyens d'extraction de dosettes (54), coopérant avec ledit panier de chargement de dosettes (13), auquel lesdits moyens d'alimentation et d'expulsion de dosettes (15) sont adaptés pour charger de manière sélective lesdites dosettes (14) sur une position de chargement préétablie et pour déplacer chaque dosette chargée de manière correspondante à ladite unité d'infusion et de distribution (11), de manière à préparer la boisson infusée relative, avec l'éjection simultanée de la dosette épuisée utilisée précédemment, et lesdits moyens d'extraction de dosettes (54) sont adaptés pour extraire chaque dosette (14) du type de boissons respectivement sélectionnées, qui est située sur la position inférieure de chaque colonne (17) qui a été déplacée de manière correspondante aux mêmes moyens d'extraction, et pour charger une telle dosette sur la position de chargement desdits moyens d'alimentation et d'expulsion (15), ledit panier de chargement de dosettes (13) étant supporté par des premiers moyens de support (19) qui peuvent mettre en prise de manière amovible les deuxième moyens de support (27) agencés en dessous de celui-ci, qui peuvent être entraînés en rotation par des premiers moyens moteurs (58) pour déplacer chaque colonne (17) contenant les dosettes des boissons sélectionnées respectivement en correspondance avec lesdits moyens d'extraction (54), et **caractérisée** également par des moyens de perforation (45 et 47) associés avec lesdits moyens d'alimentation et d'expulsion de dosettes (15) et adaptés pour perforer chaque dosette (14) avant l'étape d'infusion, pour permettre à de l'eau chaude de passer à travers la même dosette de manière à distribuer ensuite la boisson infusée ainsi préparée.

2. Unité de chargement selon la revendication 1, **caractérisée en ce que** les colonnes (17) dudit panier de chargement de dosettes (13) sont ouvertes à leurs parties supérieures pour y introduire les dosettes respectives (14) à l'intérieur, et sont munies à leurs parties inférieures d'une ouverture traversante latérale respective, qui est de temps en temps placée en coïncidence avec lesdits moyens d'extraction (54), pour extraire de chaque colonne (17) la dosette inférieure du type de boisson sélectionnée respectivement, lesdites colonnes (17) étant entourées par un boîtier cylindrique externe amovible correspondant (16), muni d'une paroi supérieure (22) pourvue de trous traversants (21) correspondant aux cavités intérieures respectives (20) des mêmes colonnes, et une ouverture traversante centrale en forme de fente (23) pour saisir ledit boîtier (16) pour l'appliquer et le retirer par rapport auxdites colonnes (17).

3. Unité de chargement selon la revendication 1, **caractérisée en ce que** lesdits premiers moyens de support (19) sont munis d'une ouverture traversante centrale pour permettre aux dosettes (14) de les traverser et pour être introduites dans la position de chargement desdits moyens d'alimentation et d'expulsion de dosettes (15).

4. Unité de chargement selon la revendication 3, **caractérisée en ce que** lesdits deuxièmes moyens de support (27) peuvent être couplés avec lesdits premiers moyens de support (19) par des moyens de jonction (28) et sont supportés par des moyens de support (26) qui peuvent être fixés à ladite enveloppe en forme de boîte (12), et sont également munis d'une ouverture traversante centrale coïncidant avec ladite ouverture traversante centrale desdits premiers moyens de support (19), pour permettre à l'ensemble moyens d'alimentation et d'expulsion de dosettes (15) - unité d'infusion et de distribution (11) de les traverser.

5. Unité de chargement selon la revendication 4, **caractérisée en ce que** lesdits premiers moyens moteurs comprennent un moteur à engrenages (58) supporté par ledit ensemble et muni d'un arbre de moteur (59) muni d'un pignon (60) s'engageant avec une couronne dentée correspondante fixée intérieurement auxdits deuxièmes moyens de support (27).

6. Unité de chargement selon la revendication 4, **caractérisée en ce que** lesdits moyens d'alimentation et d'expulsion de dosettes (15) comprennent une barre de section allongée en forme de C (31), qui est fixée sous lesdits moyens de support (26) et dans laquelle un coulisseau coulissant (32) est logé, formé par une partie rectiligne allongée (33) et une partie élargie (34), dont ladite partie allongée (33) est munie d'une crémaillère (35) mettant en prise un pignon (36), qui peut être entraîné en rotation dans deux directions de rotation opposées l'une à l'autre par un moteur à engrenages (37), supporté par lesdits moyens d'alimentation (15) de manière à déplacer ledit coulisseau coulissant (32) dans une direction rectiligne alternée, avec une course limitée par des moyens de limitation de course, et dont ladite partie élargie (34) est formée d'éléments de guidage rectiligne inférieurs (38) coulissants dans des éléments de forme correspondante (39) fixés à ladite barre de section en forme de C (31) et d'un siège de support de dosettes supérieur (40), dimensionné pour loger une dosette à la fois provenant dudit panier de chargement (13) sur la position de chargement dudit coulisseau coulissant (32), où ledit siège (40) est situé dans une position coïncidant avec celle de la colonne (17) dans laquelle la dosette sélectionnée est contenue, ledit siège (40) étant adapté pour déplacer la dosette chargée sous ladite unité d'infusion et de distribution (11) quand ledit coulisseau coulissant (32) est déplacé sur la position d'infusion relative, dans laquelle il pousse et expulse simultanément toute une dosette épuisée utilisée précédemment, en la déchargeant sur un réservoir de collecte de machine sous-jacent, ledit coulisseau coulissant (32) étant prolongé à son côté avant par une plaque plane (48), sur laquelle une petite trémie (49) ayant son embouchure de chargement (50) tournée vers le haut est fixée.

7. Unité de chargement selon la revendication 6, **caractérisée en ce que** lesdits moyens d'alimentation et d'expulsion de dosettes (15) comprennent en outre un cylindrique hydraulique supérieur (41) et un cylindre hydraulique inférieur (42) reliés au circuit hydraulique de la machine et fixés respectivement à la partie supérieure et à la partie inférieure de ladite barre de section en forme de C (31), sur des positions coïncidant les unes avec les autres et à celle dudit siège de support de dosettes (40), quand ledit coulisseau (32) est déplacé sur sa position de chargement, lesdits cylindres (41, 42) étant munis d'un perforateur central respectif (45, 47) adapté pour perforer en succession la paroi supérieure et la paroi inférieure de chaque dosette (14), et étant relié à une électrovanne respective, reliée au circuit électrique de la machine et associée au circuit hydraulique de la même machine, chaque électrovanne étant actionnée à partir d'une position de repos dans laquelle le circuit hydraulique est maintenu fermé et le cylindre relatif est élevé, conjointement avec le perforateur correspondant (45, 47), à une position de travail dans laquelle le circuit hydraulique est ouvert et le cylindre relatif est abaissé, conjointement avec le perforateur correspondant (45, 47), de sorte que ce dernier réalise la perforation de la paroi relative de chaque dosette.

8. Unité de chargement selon la revendication 7, **caractérisée en ce que** ledit cylindre supérieur (41) est supporté par une plaque plane (43) fixée à ladite barre de section en forme de C (31) au moyen de goujons (44) légèrement en saillie vers le bas sur leur partie inférieure, pour empêcher la dosette d'être soulevée durant la perforation de sa paroi supérieure, en détachant la même dosette qui tombe ainsi sur son siège de logement (40) dudit coulisseau coulissant (32), et **caractérisée en ce que** ledit cylindre inférieur (42) est supporté par un support (46) fixée à ladite barre de section en forme de C (31).

9. Unité de chargement selon la revendication 6, **caractérisée en ce que** ladite unité d'infusion et de distribution (11) est constituée par un cylindre hydraulique supérieur supplémentaire (51), muni d'un diffuseur de pulvérisation inférieure (52) adapté pour pulvériser de l'eau chaude sur la paroi supérieure de la dosette relative (14), ledit cylindre supplémentaire (51) étant fixé à ladite barre de section en forme de C (31) et relié au circuit hydraulique de la machine de même qu'il est associé à une électrovanne, reliée au circuit électrique de la machine et qui peut être actionnée depuis une position de fermeture de celui-ci, dans laquelle l'eau ne pénètre pas dans ledit cylindre supplémentaire (51), en le maintenant ainsi dans sa position élevée, à une position abaissée d'ouverture, entraînant une pulvérisation à travers ledit diffuseur (52) d'eau chaude sur la paroi supérieure de ladite dosette (14), laquelle eau est introduite à travers un conduit alimentation (53) relié audit cylindre supplémentaire (51).

10. Unité de chargement selon la revendication 4, **caractérisée en ce que** lesdits moyens d'extraction de dosettes (54) comprennent un extracteur (54), situé sur la région centrale supérieure desdits deuxièmes moyens de support (27) et coulissant sur une direction rectiligne alternée avec une course courte, limitée par des moyens de limitation de course, le long d'une fente (55) et entraînés par un moteur à engrenages (56) grâce à un système à pignon (57) et crémaillère (57'), tous les deux supportés par ledit ensemble.
